# EUROPEAN PATENT APPLICATION

(11) **EP 2 425 708 A1**
(43) Date of publication of application: **07.03.2012**
(21) Application number: 10769359.0
(22) Date of filing: 28.04.2010
(51) Int. Cl.: A01G 25/16, H02K 7/18

(54) **POWER DEVICE FOR ACTUATING IRRIGATION PIVOTS**

(30) Priority: 30.04.2009 ES 200900823 U
(71) Applicant: Fragua Herrero, Ángel, 47410 - Olmedo (Valladolid) (ES); Fragua Lazaro, Andres, 47410 - Olmedo (Valladolid) (ES)
(72) Inventor: Fragua Herrero, Ángel, 47410 - Olmedo (Valladolid) (ES); Fragua Lazaro, Andres, 47410 - Olmedo (Valladolid) (ES)
(74) Representative: Lehmann Novo, Maria Isabel
(86) International application number: PCT/ES2010/000186
(87) International publication number: WO 2010/125213

(57) **Abstract**

Power device for actuating irrigation pivots, which permits the use of excess pressure in a network of water supply in different distributions of intakes to the plots, formed from a turbine (2) with actuator mechanism (3) that regulates the distribution of the flow interspersed in the water supply to the irrigation system (1), having been associated with said turbine (2) a transmitter mechanism (9) to supply the mechanical energy that originated in the turbine to a power generator of continuous current with energy production regulator (10), associated with a group of energy accumulation batteries (11) which are in turn connected to an inverter group (12) from which the electric power supply in the command and control box (14) as well as in the corresponding motors (16) of the towers of the irrigation pivot are established.

## Description

### OBJECTIVE OF THE INVENTION

The present invention refers to a power device for actuating irrigation pivots, whose evident end is that of constituting a means of electrical supply to the control system as well as to the movement of a pivot irrigation machine.

The objective of the invention is to provide a device that takes advantage of the pressure differentials of a traditional irrigation system as opposed to an irrigation system with a "low consumption Pivot", in order to produce the electric energy necessary for the operation of the Pivot, which allows for the saving of energy in said systems of Pivot irrigation systems and at the same time allows for the possibility of eliminating the conventional electric installations and / or the diesel generators in substitution for them.

### BACKGROUND OF THE INVENTION

As it is known, Pivot irrigation is a technology developed after the first half of the 20^{th} century, widely used at a global level, fundamentally for the irrigation of horticulture crops, feeds, and extensive crops.

The basic components of the Pivot irrigation system are: a system of pipes, a system of energy supply, PVC or aluminum piping with hydrants and an irrigation structure with pressure emitters and regulators, in which the energy supply systems employed currently are one of two types: One by connection to the existing electric network plus the connection with the electric cables to the central pivot. The other using a Diesel generating set system, although in this case there exist the inconveniences of maintenance, gasoil supply and the risk of theft.

It serves to point out the fact that Central-pivot, lateral move, and hippodrome irrigation systems all exist. They are all composed of self-propelled structures equipped with sprinkler irrigation and control elements which make it possible to irrigate large surfaces with low installation and maintenance costs. The structures are formed by a series of tubes in the form of an arch, connected to an intake, elevated to 4 m in height and suspended in towers that are between 30 and 60 m apart. Supporting these towers are two wheels, which are propelled by an electric motor located in the axis of the tower.

With Central Pivot irrigation systems, water is supplied to the pipeline at a fixed point, with the structure rotating around the point. With lateral move irrigation systems; water is supplied to the pipeline by a hose, or canal, which is transferred along the side.

Combining the technologies of irrigation systems with Central pivot and with lateral move, an irrigation system with hippodrome, in which the structure moves and changes place alternatively, is obtained.

The central pivot irrigation system involves applying a controlled rain, as much in intensity as in uniformity, over the plot. The objective is that the water infiltrates in the same spot as it falls, being a continuous shift system while performing water application, 98% uniformity is achieved.

The system, which is bound to the plot, is adequate for the necessary water application during the season of crop development. The advantages presented by the central pivot irrigation system in comparison to the traditional systems, are numerous. The following advantages can be cited:
- Pressure requirements less than those necessary in the traditional systems
- Precise control of the necessary dosage in each application
- Adaptation to the different morphologies of the plots.
- Reduction in investment cost with respect to other total automatic coverage systems
- Thanks to its movement, the plot is free of obstacles for the different tasks.
- Great operational reliability
- Low maintenance and conservation costs.

As previously stated, the energy source necessary for the operation of the pivot irrigation system can be solved in two different ways. One way is through electric power supplied by the proximity to a power line. The other through a diesel generator situated in the "head" of the pivot.

In either case, according to the National Irrigation Plan of our country, as far as sprinkler irrigation is concerned, a guarantee provides users or irrigators with a minimum pressure measurement in each plot, which is established according to the needs disposed to a minimum pressure for the different irrigation systems to function. This circumstance assures that the overall network is subject to greater pressures, which permits the delivery of the pressure measurement requirements for the plots, even in the most unfavorable topographic situation causing excess pressure in all of the intakes that are found in at the most favorable topographic situation and also to ensure a pressure of 40 m.c.a in order to irrigate with the traditional sprinkler systems.

In order to resolve the excess pressure, a pressure-reducing valve is placed in the plots, before delivery to the plot, creating a dissipated power in the energy jump to the pressure-reducing valve for its performance.

### DESCRIPTION OF THE INVENTION

The proposed device has been designed to solve the aforementioned problem; to obtain an alternate energy for the movement of the pivot, using, as a source of energy, the excess pressure that is dissipated from the pressure-reducing valves located in the different irrigation intakes in the network, taking advantage of two of the operational characteristics of the pivot which are; functioning with low pressure and less energy consumption for transfer.

The energy necessities for the operation of the pivot with the device of the invention requires supply to two systems; one for the control system and the other for the transfer system to the towers.

To obtain the supply of energy to those systems (the control system and the transfer to the towers), is the reason for the device, which utilizes part of the pressure lost to the pressure-reducing valve of the hydrant, or of the pressure regulators of the nozzles on the pivot, and constitutes, a part from a turbine with flow regulators and control of the energy produced at the entrance itself and connected logically to the corresponding irrigation intake, to the exit as well as to the entrance of said turbine, pressure controls, or analogous detectors of pressure have been planned. Moreover, the regulation of the energy flow at the entrance of the turbine is done by an actuator mechanism, while the mechanical energy provided by the turbine generator is supplied to a specific mechanism. The mechanical energy produced by the turbine is supplied to an alternator through the corresponding mechanism, an alternator that generates a continuous current to supply the batteries with charging ability.

The device also contains a single-phase inverter to transform the continuous current stored in the batteries into an alternate current, complementing the device with a frequency converter, which doubles the function of the single-phase current to a three-phase current while operating the buffering of the intensity peaks during the starting of the motors of the towers by start-up ramp accompanied by various supply connections to the tower transfer system, with a power transformer and with the power connections to the command and control box.

Therefore the power device of the invention uses the excess energy that is found in the irrigation intakes on the plot, due to the network of energy dimensions for the use of specific irrigation systems, which require a pressure between 20 and 50 m.c.a. With the device of the invention the energy is created at the base of the plot, consuming between 10 and 20 m in pressure measurement allowing good operation of the pivot at precisely 20 to 25 m.c.a.

Therefore, with the device of the invention, it is possible to save the need for electric power supply by diesel generators or electrical infrastructure next to the location of the pivot, counteracting the historical advantages of the irrigation systems based on total coverage.

Moreover, the device of the invention makes the production of all energy demands of the pivot possible (power to the electric motors, power transfer and power to the command and control box), all with absolute reliability. Its operation is conditioned to the passing of water through the system, which uses the irrigation application and utilization of the pressure that would otherwise be lost to the pressure-reducing valve or nozzle pressure regulators. This pressure loss is transformed into electric energy and, moreover, diminishes the pressure on the network to an optimal working point for the pivot (2.5 atm).

In short, the device increases the versatility of irrigation pivots, adding a new differentiating feature and increasing its competitiveness, allowing for the elimination of diesel generators and / or electrical installations and achieving:
- Energy savings in the operation of the pivot.
- Savings in costs of acquisition and maintenance of generators.
- A considerable amount of savings in diesel for the operation of the pivot powered by generators
- Savings in costs of acquisition and maintenance of electrical installations (permits and licenses, power lines, transformers, auxiliary facilities, etc...)
- Considerable amount of savings in investment as the buried electrical connections to the center of the pivot are not necessary. With the device of the invention energy occurs at the base of the pivot.
- The possibility of theft is eliminated as the need for traditional systems is diminished.

Finally, the device contributes to the improvement of the environment, avoiding CO2 emissions to the atmosphere and avoiding the pollution that is caused by the manipulation of generators and construction of electrical infrastructure.

There is also the possibility of implanting the device in all pivot irrigation systems, making appropriate changes in each case.

Finally, given the great versatility of the device described, based on the use of excess energy from those with hydraulic networks, using the energy dissipated in the jump to the pressure-reducing valves or nozzle pressure-reducers. The device itself is capable of being used in the installation of facilities of similar characteristics.

Specifically the new field of action identified is for the drinking water supply networks, which share similar characteristics to the pressurized irrigation systems. The installations present various flow-pressure conditions, higher in some cases than those of irrigation networks, so they are highly proficient for the system's use.

### DESCRIPTION OF DRAWINGS

To complement the drawings, which have been made for an ease of understanding the characteristics of the invention, with a preferred example of practical operation, are attached as an integral part of the description, a set of drawings, included but not limited to the following, is represented:

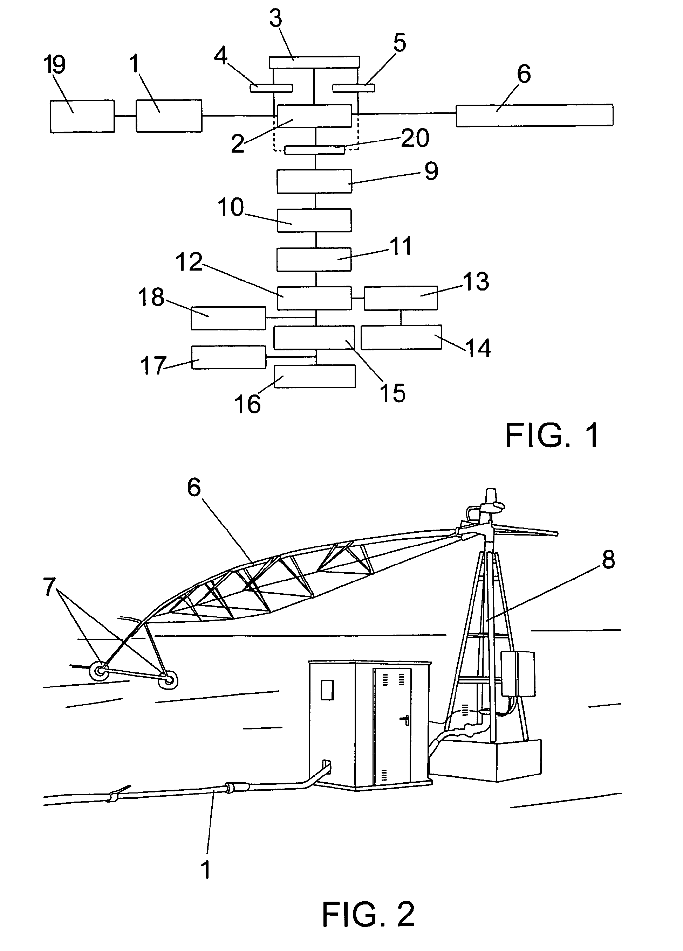

Figure 1. - Shows the scheme corresponding to the power device, the object of the invention.
Figure 2. - Shows the practical and physical operation of the device of the invention, in which a booth can be seen with the parts of the system itself, as well as the water supply, the central tower, and the actual irrigation pivot.

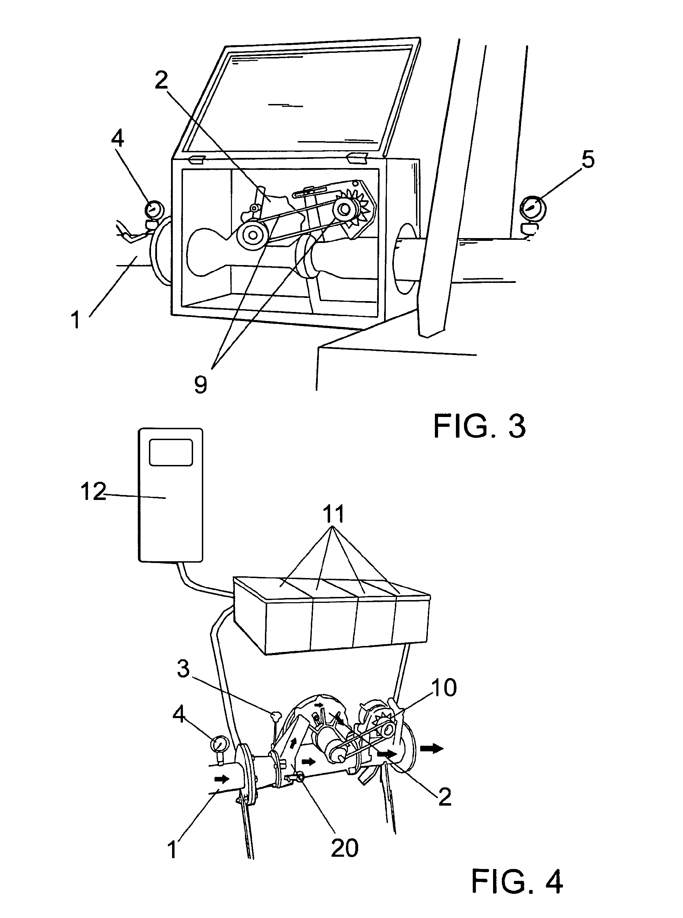

Figure 3. - Shows a detailed perspective of the turbine as a fundamental element of the device of the invention in relation to the alternator, which is interspersed between the entrance and exit of the water supply pipes.
Figure 4. - Shows, finally, a perspective view of the turbine with the alternator and the energy storage batteries connected to the corresponding inverter.

### PREFERRED EMBODIMENT OF THE INVENTION

As can be seen in the referred figures, the device of the invention is applicable to the corresponding irrigation supply (1) for the movement of a pivot, using the energy that is dissipated in the pressure-reducing valve (19) or in the pressure regulators of the nozzles of the pivot, including a turbine (2) with a flow regulating device at its entrance by means of an actuator mechanism (3) of the flow regulating device, controlled by two pressure manometers or similar detectors to control the passing of water through the turbine and the minimum pressure at the entrance of the pivot (4 & 5). The first of these is located at the entrance and the second is located at the exit where the turbine has a minimum exit pressure of 20-22 mca for the supply of (6) "a modified pivot of low pressure and low consumption in the transfer of itself", pivot that is turned with support from the wheels (7) around the tower or "head" (8) anchored to the ground.

The mechanical action produced by the water and its impact on the turbine (2) is transmitted, through a transmission system, which can be a set of pulleys and belts (9), an alternator (10) of continuous current, at 24 V and single-phase, whose alternator supplies the current to various energy accumulation batteries (11), which are connected to an inverter group (12) through which the continual energy at 24 V is transformed into alternate energy at 230 V, associated with the inverter group (12) is a transformer (13) from which is supplied the corresponding command and control box (14) of the pivot (6), while set apart from the inverter group (12) and through a frequency converter (15) supply is fed to the motors (16) of the towers of the pivot, with support from the wheels (7) for the movement of these and, therefore, of the pivot itself.

A continuation of the frequency inverter provides a filtration device (17) to reduce the noise of the electrical signal.

Finally among the inverter group (12) and the frequency converter (15) a system of battery capacitors (18) has been provided for system optimization

## Claims

1. Power device for actuating irrigation pivots, planned to allow the use of excess pressure which has a water supply network in the different distribution outlets of the plots, especially planned for the use of energy that would otherwise dissipate in the pressure-reducer valve placed before the entrance of water in each plot, or the pressure regulators of the nozzles of the pivot **characterized in that** a turbine (2) with a flow regulating device (3) is interspersed between the water supply pipes of the irrigation supply (1), being associated with said turbine (2) a transmitter mechanism (9) to supply the mechanic energy originating in the turbine to the continual current alternator with energy production regulator (10), associated with an energy accumulation battery group (11). These, in turn, are connected to an inverter group (12) from that which is established the feeding of the power supply to the command and control box (14) as well as in the corresponding motors (16) of the pivot irrigation towers.

2. Power device for actuating irrigation pivots according to claim 1, **characterized in that** the entrance as well as the exit of the turbine with flow regulation (2) manometer gauges are planned or a similar pressure detector to control the energy produced and the loss of pressure in the pressure mechanism (4 and 5).

3. Power device for actuating irrigation pivots according to claim 1, **characterized in that** it comprises an actuator mechanism (3) for actuating the regulator of the flow provided at the entrance of the turbine (2)

4. Power device for actuating irrigation pivots according to claim 1, **characterized in that** between the inverter group (12) of transformation of the continuous current into alternate current and the supply to the command and control box (14), a single-phase transformer (13) and a frequency converter (15) have been planned.

5. Power device for actuating irrigation pivots, according to claim 1, **characterized in that** between the inverter group (12) and the frequency converter (15) a system of battery capacitor (18) is established for system optimization, as well as a filtering device (17) in continuation of the frequency converter (15).
